Europäisches Patentamt

European Patent Office

Office européen des brevets

(19)

(11) Veröffentlichungsnummer : **0 198 956**
**B1**

(12) # EUROPÄISCHE PATENTSCHRIFT

(45) Veröffentlichungstag der Patentschrift :
15.03.89

(21) Anmeldenummer : 85115719.8

(22) Anmeldetag : 10.12.85

(51) Int. Cl.⁴ : **G 01 G 11/08**, G 01 G 23/48

(54) Vorrichtung zum kontinuierlichen gravimetrischen Dosieren und pneumatischen Fördern von schüttfähigem Gut.

(30) Priorität : 07.06.85 DE 3520551
25.04.85 DE 3514910

(43) Veröffentlichungstag der Anmeldung :
29.10.86 Patentblatt 86/44

(45) Bekanntmachung des Hinweises auf die Patenterteilung : 15.03.89 Patentblatt 89/11

(84) Benannte Vertragsstaaten :
AT BE CH DE FR GB IT LI SE

(56) Entgegenhaltungen :
CH--A-- 445 882
DE--A-- 2 528 821
DE--A-- 3 217 406
DE--A-- 3 310 735
DE--C-- 1 142 257

(73) Patentinhaber : **Pfister GmbH**
**Stätzlinger Strasse 70**
**D-8900 Augsburg (DE)**

(72) Erfinder : **Häfner, Hans**
**Fichtenweg 15**
**D-8890 Aichach-Walchshofen (DE)**

(74) Vertreter : **Kahler, Kurt, Dipl.-Ing.**
**Postfach 248 Gerberstrasse 3**
**D-8948 Mindelheim (DE)**

EP 0 198 956 B1

## Beschreibung

Die Erfindung betrifft eine Einrichtung zum kontinuierlichen, gravimetrischen Dosieren und pneumatischen Fördern von schüttfähigem Gut gemäß dem Oberbegriff des Patentanspruchs 1.

Die DE-A1-32 17 406 beschreibt eine derartige Einrichtung. Das Gehäuse und der darin befindliche Rotor sind dabei im allgemeinen aus Metall hergestellt, so daß sie eine erhebliche Masse besitzen, die in der Größenordnung von einigen hundert Kilogramm liegen kann. Demgegenüber ist die durch die Meßstrecke geführte Masse des Fördergutes verhältnismäßig gering, beispielsweise in der Größenordnung von einigen zehn Kilogramm. Während die Fördergutzuführung im wesentlichen aufgrund der Schwerkraft erfolgt, wird das Fördergutpneumatisch entleert, so daß erhebliche Druckunterschiede vorhanden sind, die als Kräfte oder Momente auf den Rotor wirken. Ein weiterer störender Einfluß kann sich durch Temperaturschwankungen ergeben, die beispielsweise durch sehr unterschiedliche Temperaturen des zu fördernden Gutes hervorgerufen werden. Insgesamt zeigt sich somit, daß die von der Kraftmeßvorrichtung gemessenen Werte erheblichen Einflüssen unterliegen, so daß die Meßgenauigkeit insbesondere im Langzeitbetrieb beeinträchtigt werden kann.

Die DE-A1-33 10 735 beschreibt ganz allgemein, daß bei einem Wägebehälter oder einer Wägeplattform Kraftnebenschlüsse an der Wiegegut-Zuführungsverbindung und -Abführungsverbindung auftreten. Nach Art einer Simulation werden jeweils Meßeinrichtungen für einen die Größe des Kraftnebenschlusses bestimmenden Parameter zugeordnet, der bei konstant gehaltener Belastung der Wägevorrichtung variiert wird. In aus Abhängigkeit von der Größe des Parameters erfolgenden scheinbaren Belastungsänderungen wird eine Korrekturgröße für das Ausgangssignal der Wägezelle gewonnen. Dies bedeutet, daß bei der bekannten Einrichtung Kraftnebenschlüsse, wie sie bei Temperaturänderungen am Zuleitungsrohr bzw. am Ableitungsrohr auftreten, in Kauf genommen werden und eine rechnerische Kompensation vorgenommen wird.

Der Erfindung liegt die Aufgrabe zugrunde, eine Einrichtung der gattungsgemäßen Art anzugeben, bei der die Meßgenauigkeit auch über längere Zeit verhältnismäßig dadurch hochgehalten werden kann, daß die Auswirkung mechanischer, thermischer und/oder pneumatischer Einflüsse von vorn herein möglichst vermieden und notfalls zusätzlich kompensiert werden.

Diese Aufgabe wird gemäß der Erfindung gelöst durch eine Einrichtung mit den Merkmalen des Kennzeichens des Patentanspruchs 1.

Bevorzugte Weiterbildungen der erfindungsgemäßen Vorrichtung sind in den abhängigen Ansprüchen gekennzeichnet.

Weitere Merkmale und Vorteile der erfindungsgemäßen Vorrichtung ergeben sich aus der nachfolgenden Beschreibung von Ausführungsbeispielen und der Zeichnung. Es zeigen :

Fig. 1 eine Prinzipdarstellung einer erfindungsgemäßen Vorrichtung in Seitenansicht,

Fig. 2 eine Prinzipdarstellung der Vorrichtung nach Fig. 1 in Richtung des Pfeiles II in Fig. 1,

Fig. 3 einen Vertikalschnitt durch das Gehäuse und den Rotor der Vorrichtung nach Fig. 1 und 2,

Fig. 4 Einzelheiten bezüglich der Anordnung der Achse A-A gemäß Fig. 1 und 2,

Fig. 5 eine Seitenansicht senkrecht zu derjenigen nach Fig. 4 zur Erläuterung der Aufhängung des Gehäuses der erfindungsgemäßen Vorrichtung,

Fig. 5a bis 5c verschiedene Lagerausbildungen für das Gehäuse,

Fig. 6a bis 6e Ausführungen von Kompensatoren, die zur rückwirkungsfreien Verbindung bei der erfindungsgemäßen Vorrichtung verwendet werden,

Fig. 7 eine Kraftmeßvorrichtung mit Kompensation der Schwerpunktsverschiebung bei der erfindungsgemäßen Vorrichtung ;

Fig. 8 eine Draufsicht auf den Rotor der erfindungsgemäßen Vorrichtung,

Fig. 9 eine Draufsicht auf den Rotor der erfindungsgemäßen Vorrichtung in Prinzipdarstellung und

Fig. 10 ein Impulsdiagramm zur Erläuterung der kompensierenden Arbeitsweise des Rotors nach Fig. 10.

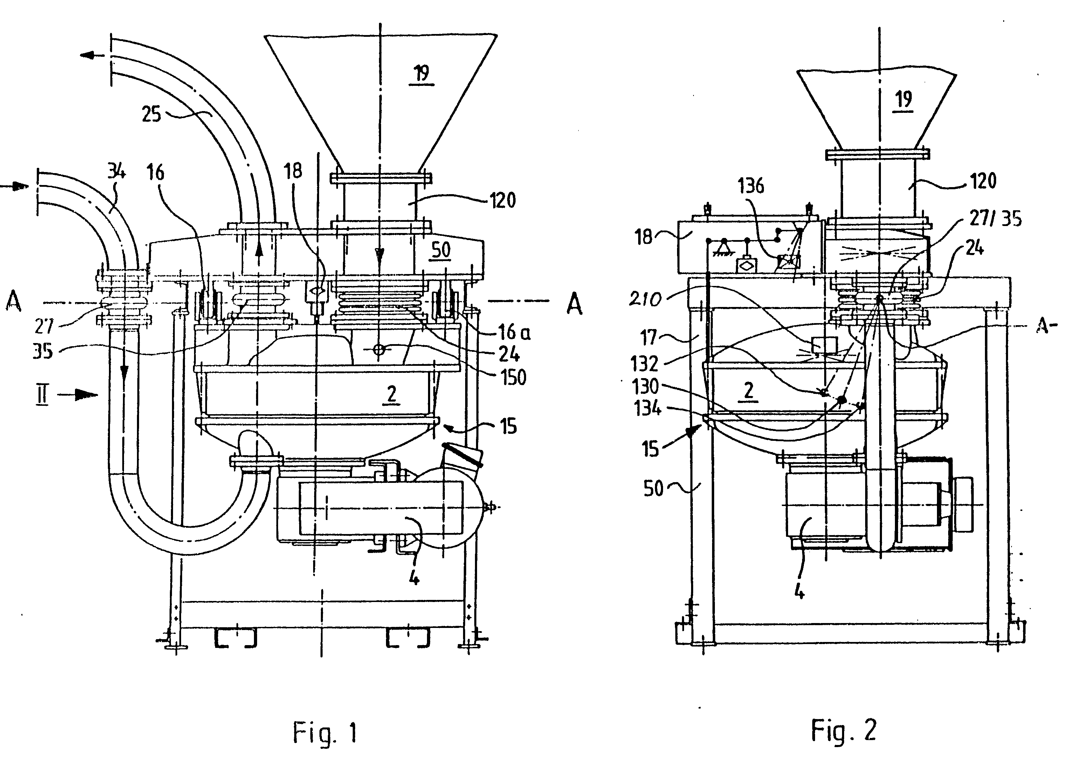

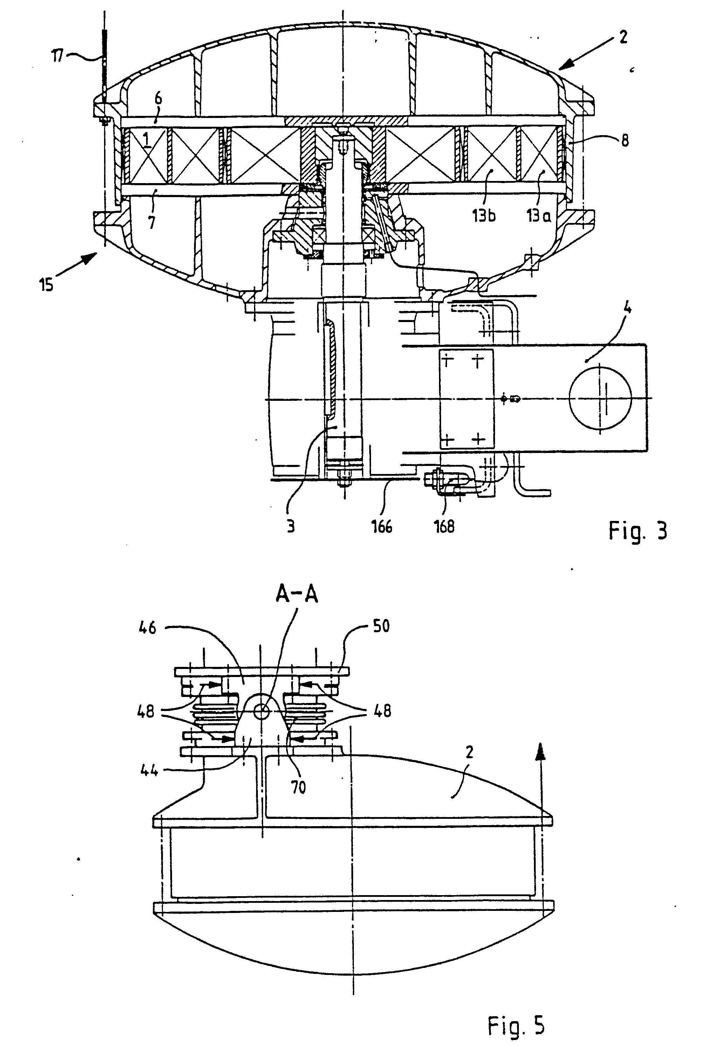

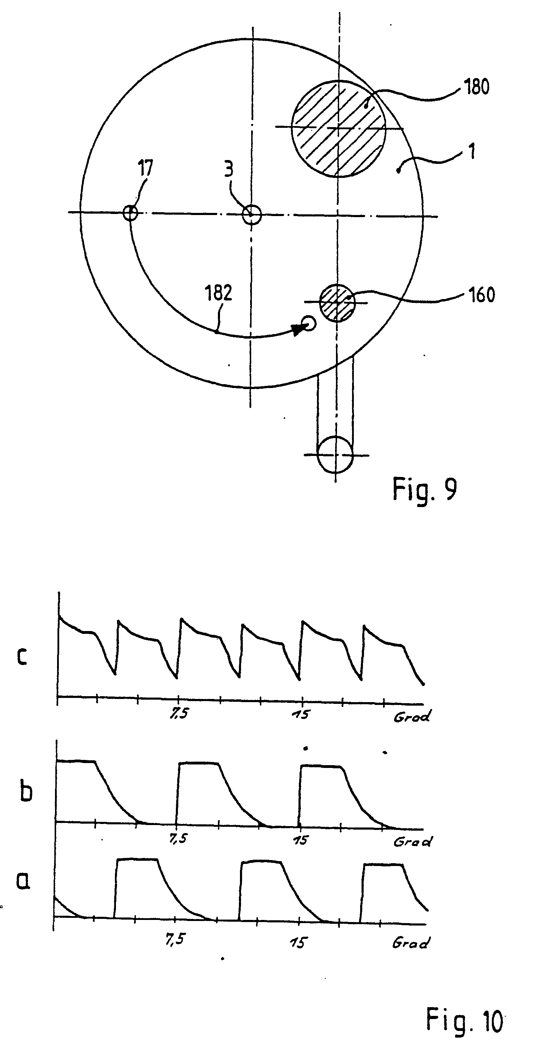

Die Fig. 1 bis 3 zeigen eine bevorzugte Ausführungsform der erfindungsgemäßen Vorrichtung 15 mit einem Gehäuse 2, das einen Rotor 1 (Fig. 3) dicht umschließt. Der Rotor 1 ist über eine Welle 3 drehbar und antreibbar gelagert und erhält seinen Antrieb von einer Motor-Getriebe-Einheit 4, die mit dem Gehäuse 2 verbunden ist. Der Rotor 1 läuft zwischen zwei zueinander parallelen Dichtplatten 6 und 7, die über einen zylindrischen Mantel 8 seitlich abgeschlossen werden. Der Rotor 1 besitzt einen zylindrischen Mantel 20 (Fig. 9) sowie zwei Gruppen in konzentrischen Ringen angeordneter Fördertaschen 13a, 13b, wobei die Gruppen zueinander versetzt sind.

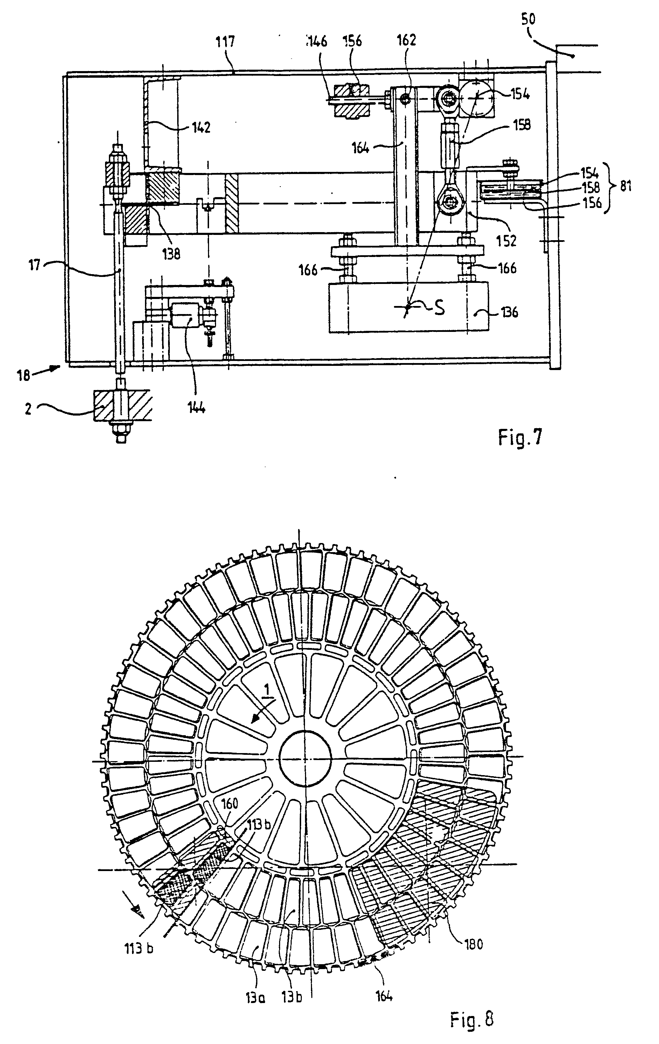

Das Gehäuse 2 ist schwenkbar um die Achse A-A an Punkten 16, 16a an einem Gerüst 50 angelenkt und wird an der linken Gehäuseseite (Fig. 2) über einen Stab 17 gehalten, der zu einer Kraftmeßeinheit 18 führt, die am Gerüst 50 angebracht ist (vgl. auch Fig. 7).

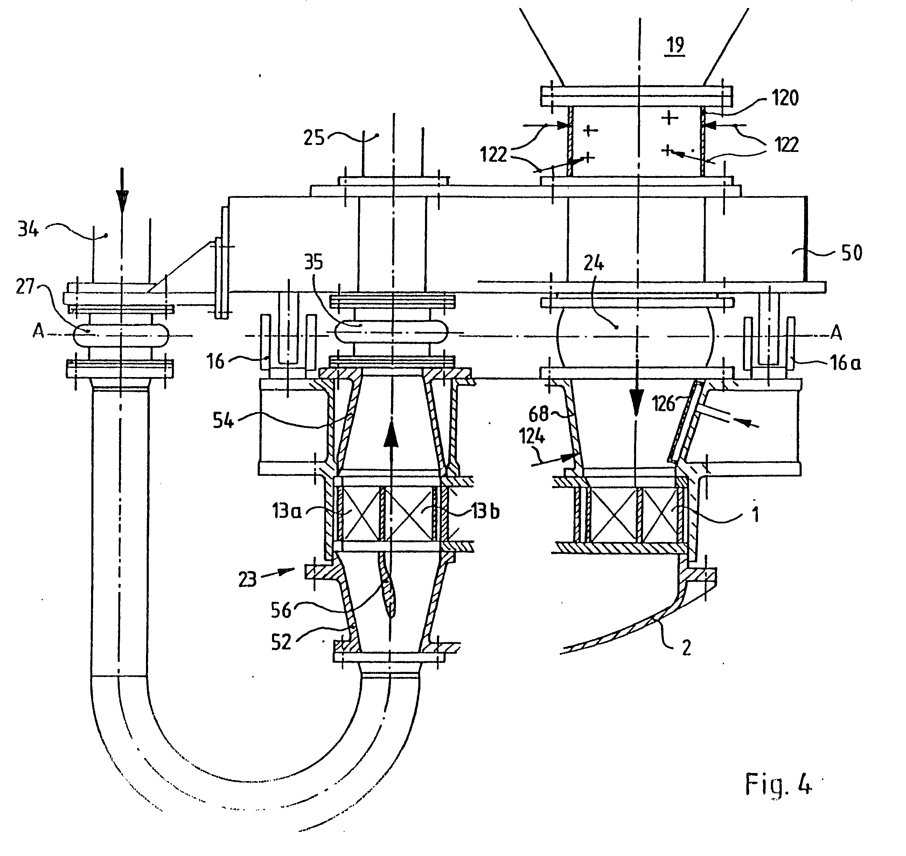

Das gravimetrisch zu dosierende Gut, etwa Kohlenstaub oder dgl., ist in einem oberhalb des Gehäuses 2 angeordneten Behälter 19 gelagert und wird vorzugsweise unter dem Einfluß der Schwerkraft über einen ersten elastischen Kompensator 24 und ein Aufgabeelement 68 (vgl. auch Fig. 4) dem Rotor 1 zugeführt.

Die Entleerung der an der Aufgabestation gefüllten Fördertaschen erfolgt an einer Entleerungsstation 23 (Fig. 4) durch Ausblasen der Fördertaschen 13a, 13b (Fig. 3 und 8). Hierzu ist eine am Gerüst befestigte Blasleitung 34 (Fig. 1) über einen zweiten elastischen Kompensator 27 an den unteren Anschluß 52 (Fig. 4) am Gehäuse 2 geführt. Das aus den Fördertaschen ausgeblasene Gut wird über einen oberen Anschluß 54 in eine Abförderleitung 25 (Fig. 1) geblasen, die mit dem oberen Anschluß 54 über einen dritten Kompensator 35 in Verbindung steht. Wie aus den Fig. 1 bis 4 ersichtlich, liegen alle drei Kompensatoren 24, 27 und 35 sowie die Anlenkpunkte 16, 16a auf einer Schwenkachse A-A.

Im Betrieb schwenkt das Gehäuse 2 je nach den Fördertaschen 13a, 13b zugeführter Menge an zu messendem Gut geringfügig um die Achse A-A und beaufschlagt die Kraftmeßvorrichtung 18 mit einem entsprechenden Drehmoment.

Die Kompensatoren 24, 27 und 35 dienen zur praktisch vollkommen rückwirkungsfreien Verbindung der entsprechenden Leitungen mit dem Gehäuse 2 und sind einerseits mit diesem an den entsprechenden Anschlußstellen verbunden, während sie andererseits an dem Gerüst 50 angebracht sind (vgl. insbesondere Fig. 1 und 4).

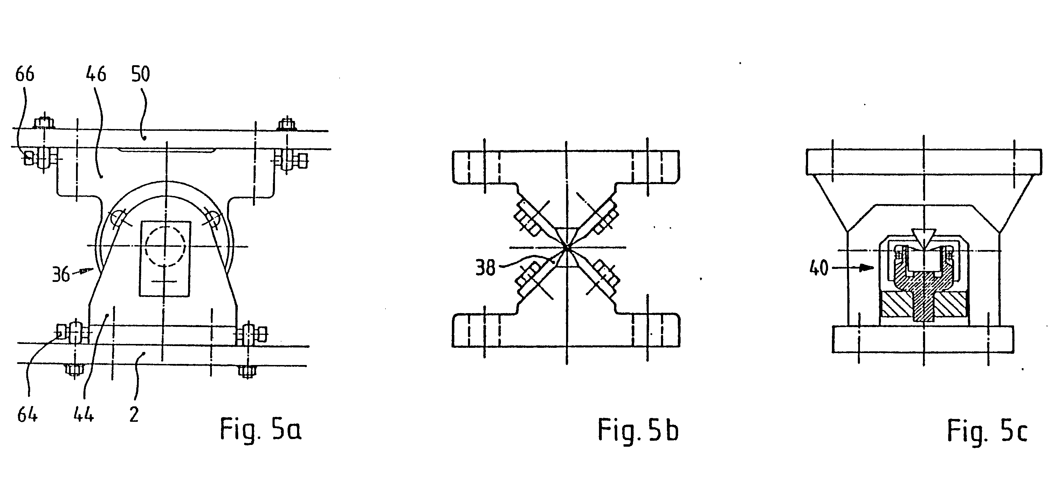

Bevorzugt läuft die Achse A-A durch die Bewegungsmittelpunkte der Kompensatoren 24, 27 und 35, und die Anlenkpunkte 16, 16a sind für ein praktisch reibungsfreies Schwenken des Gehäuses 2 um die Achse A-A ausgebildet. Möglichkeiten einer Lagerung des Gehäuses 2 am Gerüst 50 sind in den Fig. 5a bis c im Prinzip dargestellt. Fig. 5a zeigt ein Wälzlager 36, Fig. 5b ein Kreuzfedergelenk 38, Fig. 5c ein Schneiden-/Pfannenlager 40.

Für eine genaue Dosierung ist die exakte Positionierung der Achse A-A von Bedeutung, wodurch Einflüsse beseitigt werden, die sich aus Fertigungstoleranzen am Gehäuse 2 mit Rotor 1 sowie der Kompensatoren 24, 27 und 35 ergeben. Für eine derartige Justage sind an den Lagerabstützteilen 44, 46 Vorrichtungen vorgesehen, die eine Verstellung der Lagerabstützteile gegenüber dem Gerüst 50 und/oder dem Gehäuse 2 ermöglichen. Fig. 5 zeigt im Prinzip diese Justagemöglichkeit durch seitliches Verschieben der Lagerabstützteile 44, 46 in Richtung der Pfeile 48 bezüglich des Gehäuses 2 bzw. des Gerüsts 50.

In Fig. 5a ist eine derartige Justagemöglichkeit in beispielsweiser Form wiedergegeben. Hierzu sind anliegend zu beiden Seiten der Lagerabstützteile 44, 46 Justageschrauben 64, 66 vorgesehen.

Zur Kompensation der Einflüsse von Druckunterschieden an der Aufgabe — und der Entleerungsstation werden unterschiedliche Drucke an die beiden Stationen angelegt und die Lager so verschoben, daß schließlich keine Reaktion bei Druckveränderung auftritt. Hiermit ist ein wesentlicher Fehlereinfluß beseitigt, da nun die Achse exakt durch die Mitte der an der Beschickungs- und Entleerungsstation in den Kompensatoren wirksamen resultierenden Kolbenflächen verläuft.

Für eine exakte Arbeitsweise der erfindungsgemäßen Vorrichtung ist auch die Ausbildung der Kompensatoren 24, 27 und 35 von Bedeutung.

Prinzipiell kann ein Balgkompensator aus Metall, beispielsweise Stahl, verwendet werden, wie er mit dem Bezugzeichen 70 in Fig. 5 und 6a zu sehen ist. Bei einem derartigen Balgkompensator 70 besteht jedoch eine gewisse Gefahr, daß sich bei asymmetrischer Erwärmung eine Rückwirkung ergibt, die das Meßergebnis verfälscht.

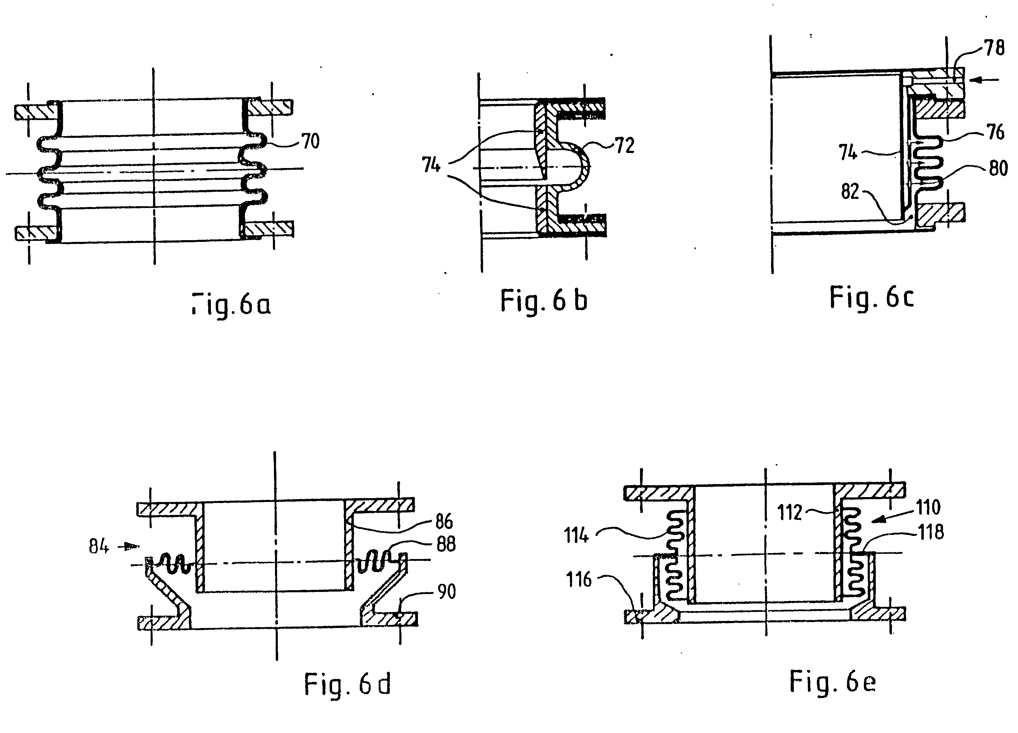

Fig. 6b zeigt eine andere Ausführungsform, nämlich einen Wulstkompensator 72 aus Gummi mit Stahlgewebe. Hat das zu fördernde Gut jedoch höhere Temperaturen, so besteht zumindest auf die Dauer die Gefahr eines Durchbrennens. Es kann deshalb zweckmäßig sein, ein Schutzrohr 74 im Inneren des Kompensators anzubringen, das bei einem Ausblaskompensator gemäß Fig. 6b aus zwei Teilen bestehen kann, zwischen denen ein ringförmiger Schlitz freigelassen wird.

Bei einem Einlaufkompensator gemäß Fig. 6c an der Aufgabestation genügt ein einteiliges Rohr 74 für einen Balgkompensator 76. Fig. 6c zeigt ferner, daß zur Vermeidung von Staubablagerungen an den inneren Räumen des Balgkompensators 76 eine Blasleitung 78 vorgesehen sein kann, die sich bis in die Nähe der inneren Balgzwischenräume erstreckt und dort Blasluft über Düsen 80 einströmen läßt. Der ausgeblasene Staub wird dann in die Hauptleitung der Aufgabestation über einen Kanal 82 ausgeblasen. Eine ähnliche Ausblasvorrichtung kann auch bei einem Ausblaskompensator an der Entleerungsstation gemäß Fig. 6b angeordnet werden, wobei das Ausblasen durch den ringförmigen Schlitz zwischen den beiden Rohren 74 erfolgt.

Fig. 6d zeigt eine weitere Ausführungsform eines Kompensators in Form eines Membrankompensators 84 mit einem Oberteil 86, das über eine vornehmlich waagerechte Membran 88 in einem Unterteil 90 gelagert ist. Während ein derartiger Membrankompensator 84 verhältnismäßig temperaturunempfindlich ist und bei Herstellung aus Metall auch keine Gefahr eines Durchbrennens besteht, ist eine gewisse Druckabhängigkeit gegeben, die zur negativen Beeinflussung des Meßergebnisses führen kann.

Eine besonders bevorzugte Ausführungsform eines Kompensators ist der Doppelbalgkompensator 110 gemäß Fig. 6e. Bei diesem Doppelbalgkompensator 110 ist ein zylinderförmiges Oberteil 112 an seinem Außenumfang mit einem Balg 114 vorzugsweise aus Metall versehen, wobei die Ober- und Unterkante des Balges 114 im oberen bzw. unteren Bereich des zylinderförmigen Oberteils 112 befestigt ist. Ein Unterteil 116 mit annähernd zylinderförmiger Ausbildung ist mit dem Balg 114 an dessen Mitte 118 verbunden. Da der obere und untere Teil des Balges 114 die gleiche Federkennlinie besitzt, ergibt sich auch bei asymmetrischer Erwärmung keine Reaktion. Der Raum zwischen dem Außenmantel des zylinderförmigen Oberteils 112 und dem Balg 114 kann mit Flüssigkeit gefüllt werden, was zu einem Temperaturausgleich beiträgt. Das zylinderförmige Oberteil 112 dient gleichzeitig als Schutzrohr für den Balg 114.

Trotz der zuvor beschriebenen Maßnahmen kann eine ungleichmäßige Materialzuführung aus dem Behälter 19 zur Aufgabestation zu einer Verfälschung des Meßergebnisses führen. Gemäß der Erfindung ist deshalb zwischen der Unterseite des Behälters 19 und der Oberseite des Kompensators 24 ein Fallrohr 120 eingefügt, das sich ständig von Behälter 19 her aufgrund der Schwerkraft füllt und andererseits nach unten hin zu förderndes Gut an den Rotor 1 gleichmäßig abgibt (Fig. 1, 2 und 4).

Die Fördergutzufuhr kann ferner dadurch verbessert werden, daß über den Bereich des Fallrohres 120 Düsen zur Zuführung von Luft angeordnet sind, die in Fig. 4 durch Pfeile 122 dargestellt werden und eine Dombildung vermeiden.

Als weitere Maßnahme einer gleichförmigen Zuführung von zu förderndem Gut kann das Aufgabeelement 68 ebenfalls mit Düsen 124 versehen sein (Fig. 4). Alternativ dazu kann das Aufgabeelement 68 mit einem Sinterboden 126 ausgekleidet sein, durch den Luft eingeblasen wird. Die Luftzufuhr im Fallrohr bzw. im Aufgabeteil 68 führt zusammen mit der vom Rotor kommenden Luft zu einer Fluidisierung des zu förderden Gutes, so daß dieses homogenisiert wird.

Hohe Temperaturunterschiede des Schüttgutes bewirken ständige Temperaturänderungen, die das Meßergebnis der Vorrichtung beeinflussen können ; durch Anbringen eines Temperatursensors 150 (Fig. 1) im Bereich der Schüttgutaufgasbestation, insbesonder am Aufgabeteil 68 lassen sich die jeweiligen Temperaturen feststellen und bei der Meßwerterfassung als temperaturbedingte Änderung des Nullpunkts und der Kalibrierung kompensieren.

Schwingungen und Störimpulse, die in der Umgebung der erfindungsgemäßen Vorrichtung auftreten, können die Momentanlasterfassung beeinträchtigen. Zur Reduzierung von Störspitzen ist deshalb die Kraftmeßeinrichtung 18 mit einem Dämpfungsglied ausgeführt. Dieses kann gemäß Fig. 7 ein hydraulisches Dämpfungsglied 81 sein, das auf den Hebelarm 152 in der Kraftmeßeinrichtung 18 einwirkt. Das hydraulische Dämpfungsglied 81 besteht aus einer in einem Behälter 154 enthaltenen Flüssigkeit 156 in der ein großflächiger Kolben 158 mit geringem umfangsmäßigem Abstand von der Behälterinnenwand geführt ist.

Für eine möglichst rückwirkungsfreie Messung ist auch die Aubildung und Anordnung des Rotors 1 von Bedeutung. Wie aus Fig. 8 ersichtlich, besitzt der Rotor 1 mehrere konzentrische Ringe von Fördertaschen, nämlich im Ausführungsbeispiel 2 konzentrische Ringe von Fördertaschen 13a und 13b, wobei die Fördertaschen der beiden Ringe zueinander versetzt sind. Hierdurch vergleichmäßigt sich die Entleerung der Fördertaschen 13a, 13b an der Entleerungsstation unter Zuführen von Druckluft. Die in Fig. 8 schraffierte Fläche 160 stellt den Querschnitt der Entleerungsöffnung dar, während Fig. 4 eine Seitenschnittansicht der Entleerungsstation wiedergibt. Fig. 8 zeigt deutlich, daß sich in der gerade dargestellten Stellung des Rotors 1 zwei Fördertaschen 113a und 113b über ihre ganze Fläche im Bereich der Entleerungsöffnung 160 befinden. Fig. 4 zeigt einen Strömungsverteiler 56, durch den der zugeführte Luftstrom auf die inneren und äußeren Fördertaschen 13a, 13b verteilt wird. Die Versetzung der Fördertaschen zueinander und die störungsfreie Aufteilung der Luftströmung vermeiden eine Pulsation beim Ausblasen des Fördergutes aus den Fördertaschen an der Entleerungsstation. Fig. 10 veranschaulicht diese Verbesserung. Die unter a und b dargestellten Impulse stellen die Pulsation, d. h. die jeweiligen Druckverhältnisse für jeden konzentrischen Ring von Fördertaschen dar, der an der Entleerungsstation herrscht. Durch die vorgenannten erfindungsgemäßen Maßnahmen ergibt sich eine Druckverteilung nach Kurve c und damit auch eine wesentlich gleichmäßigere Förderung von dosiertem Gut, die in vielen Anwendungsfällen erwünscht oder gar erforderlich ist.

Eine weitere Verfälschung des Meßergebnisses kann durch eine Unwucht des Rotors 1 auftreten. Diese wird entweder in üblicher Weise durch Anbringen von Wuchtmassen z. B. 164 (Fig. 8) mechanisch beseitigt, oder die Unwucht wird elektronisch kompensiert. In Fig. 3 sind dazu zwei Alternativen aufgezeigt. Die erste Möglichkeit einer elektronischen Kompensation der Unwucht des Rotors 1 besteht darin, die Winkelposition mittels einer etwa am unteren Ende der Rotorwelle 3 angebrachten Schaltfahne 166 anzuzeigen, die nach jeweils einer Umdrehung in einem Sensor 168 einen Impuls hervorruft, der der elektronischen Auswerteeinheit der erfindungsgemäßen Vorrichtung zugeführt wird. Bei leer oder gleichmäßig gefüllt umlaufenden Rotor läßt sich dann der Einfluß der Unwucht auf das Meßergebnis bestimmen und eine Speicherung entsprechender Korrekturwerte vornehmen. An die Stelle der Schaltfahne 166 kann auch ein mit dem Rotor umlaufendes Zahnrad treten, dessen Zähne über einen Sensor Impulse für ein an sich bekanntes Digitalmeßgerät, insbesondere einen Zähler geben. Hiermit wird die jeweilige Winkellage eindeutig durch den Zählerstand wiedergegeben und mit den Momentlastwerten in Beziehung gesetzt. Schaltfahne und Digitalmeßgerät können auch gemeinsam verwendet werden.

Es sei noch darauf hingewiesen, daß durch die Aufteilung der Fördertaschen auf konzentrische Ringe die Möglichkeit besteht, die Abführleitung 25 (Fig. 1) an der Entleerungsstation aufzuteilen, so daß eine volumetrische Verteilung von gemessenem gefördertem Gut an zwei oder mehrere Verbraucher erfolgen kann. Jedem konzentrischen Ring wird dann eine eigene Abführleitung 25 zugeordnet.

Durch die funktionsbestimmte Lage der Drehachse A-A durch die Bewegungsmitte der Kompensatoren und die aus der großen Masse der Gehäuse- und Rotorteile bestimmte Schwerpunktslage ergeben sich bereits bei geringer Veränderung der Einbaulage aufgrund einer Einfederung oder einer temperaturabhängigen Lageveränderung winkelmäßige Abweichungen des Masseschwerpunkts der Gesamtvorrichtung 15 um die Drehachse, die zu einer Verschiebung des Nullpunkts der Meßeinrichtung führen. In Fig. 2 ist diese Situation in prinzipieller Form skizziert. Der Schwerpunkt 130 kann durch die vorgenannten Veränderungen sich in eine Lage verändern, die bei 132 bzw. 134 in übertriebener Weise dargestellt ist. In der Kraftmeßvorrichtung 18 ist deshalb eine Kompensationsvorrichtung angeordnet, die eine Pendelmasse 136 aufweist. Fig. 7 zeigt Einzelheiten dieser Kompensationsvorrichtung.

Der vom Gehäuse 2 abgehende Stab 17 gelangt durch eine Öffnung in ein Gehäuse 117 der Kraftmeßvorrichtung und ist an dem Balken 152 angelenkt. Dieser ist um die Achse 138 schwenkbar, insbesondere über ein Kreuzfedergelenk an der im Gehäuse angebrachten Schiene 142 gelagert. In Abstand von der Schwenkachse 138 greift, beispielsweise über eine Schneide, die eigentliche Kraftmeßzelle 144 an, die in bekannter Weise etwa als Dehnungsmeßstreifenzelle ausgebildet sein kann. Zur Kompensation der durch das asymmetrisch bezüglich der Achse A-A gelagerte Gehäuse auf den Stab 17 ausgeübten Kraft ist ein Hebelarm 146 an einem Punkt 154 im Gehäuse angelenkt und an seinem freien Ende mit einem verstellbaren Gewicht 156 versehen. Ein längenverstellbarer Arm verbindet den Hebel 146 mit dem vom Stab 17 entferntliegenden Ende des Balkens 152, an dem auch die Dämpfungsvorrichtung 81 angebracht ist.

Um eine horizontale Achse 162 schwenkbar ist über einen Hebel 164 die Pendelmasse 136 angebracht, die über Schrauben 166 in ihrer Höhe verstellbar ist. Die Verbindung zwischen dem Punkt 154 und dem Schwerpunkt S der Pendelmasse 136 verläuft parallel zur Verbindung der Achse A-A mit dem Schwerpunkt 130 der Anordnung 15, wobei sich eine Verschiebung des Gerüsts 50 aus der horizontalen Lage in gleicher Weise auf die Anordnung 15 wie auf dei Pendelmasse 136 auswirkt (vgl. auch Fig. 2).

Fig. 9 zeigt schließlich im Prinzip eine weitere Verbesserung der möglichst gleichförmigen Dosierung von zu förderndem schüttfähigem Gut mit dem Rotor 1 der Aufgabeöffnung 180 und der Entleerungsöffnung 160 (vgl. auch Fig. 8) sowie den Angriffspunkt des Stabes 17 der Kraftmeßvorrichtung 18 am Gehäuse und die Rotordrehwelle 3. Wie durch den Pfeil 182 angezeigt werden soll, erfolgt zwischen der Messung des sich im Rotor befindlichen Fördergutes und dem Wirksamwerden des jeweiligen Meßwertes auf die Regelung der Winkelgeschwindigkeit des Rotors eine Verzögerung derart, daß der jeweilige Meßwert erst kurz vor der Entleerungsöffnung an die Regelung weitergegeben wird, so daß eine evtl. notwendige Veränderung der Winkelgeschwindigkeit erst zu dem gerade richtigen Zeitpunkt durchgeführt wird.

Fig. 2 zeigt auch eine alternative Möglichkeit, die Schwerpunktverschiebung der Anordnung 15 zu kompensieren, und zwar dadurch, daß am Gehäuse 2, vorzugsweise auf dessen Oberseite und in möglichst kurzer Entfernung vom Schwerpunkt der Anordnung 15 ein an sich bekannter Schrägstellungs- oder Inklinationsmesser 210 angebracht wird. Dieser kann beispielsweise aus einem Pendel bestehen, das auf einen Differentialtransformator einwirkt. Dieser gibt je nach Pendellage ein entsprechendes Differenzsignal ab, das für eine elektronische Kompensation der Schwerpunktverlagerung durch Einbeziehung in die Meßwerterfassung verwendet wird.

Bei Langzeitbetrieb der Einrichtung können Nullpunkt- bzw. Kalibrierverschiebungen auftreten, die sich störend auf die Absolutgenauigkeit und auf die Reproduzierbarkeit auswirken. Es war deshalb bisher erforderlich, den Betrieb von Zeit zu Zeit zu unterbrechen, die Nullpunkteinstellung zu überprüfen und gegebenenfalls zu korrigieren. Eine Betriebsunterbrechung von kontinuierlich laufenden Betriebsanlagen, etwa Zementbrennöfen oder dergleichen ist jedoch unerwünscht.

Es wird deshalb die Einrichtung so ausgestaltet, daß während des Betriebs der Dosiervorrichtung eine Nullpunktabweichung festgestellt und bei der Auswertung berücksichtigt werden kann, ohne daß die Schüttgutförderung für eine störende Zeit unterbrochen wird.

Hierzu wird die Drehrichtung des Rotors 1 kurzzeitig umgekehrt (siehe Fig. 9). Die an der Ladestation 180 gefüllten Fördertaschen bewegen sich in Urzeigerrichtung nur über die kurze Strecke zwischen der Lade- und Entladestation. Mit der Kraftmeßeinrichtung 18 wird das augenblickliche, durch das Fördergut bewirkte Moment gemessen und mit dem Moment in Beziehung gesetzt, welches während der Förderung des Schüttgutes in normaler Betriebsdrehrichtung bei der gleichen Geschwindigkeit gemessen wurde. Die sich ergebende Beziehung wird dann dazu verwendet zu bestimmen, ob eine Nullpunktabweichung aufgetreten ist oder nicht.

Vor Inbetriebnahme einer erfindungsgemäßen Vorrichtung können verschiedene Beziehungen oder Verhältnisse unter Durchführung von verschiedenen Testläufen bestimmt und gespeichert werden, wobei bei verschiedenen Geschwindigkeiten der Rotor 1 unterschiedlich beladen und in Betriebsrichtung bzw. entgegengesetzt in Rotation versetzt wird. Die sich ergebenden Verhältnisse werden dann in einem Digitalspeicher gespeichert und während des Betriebs der Vorrichtung für einen Vergleich mit den tatsächlich festgestellten Verhältnissen verwendet.

Tritt im Betrieb eine Abweichung eines gespeicherten Verhältnisses und eines gerade festgestellten Verhältnisses auf, dann kann die Differenz dazu verwendet werden eine Nullpunktabweichung zu korrigieren. Eine derartige Korrektur wird erreicht durch Korrektur der Menge des zu fördernden Materials. Alternativ dazu kann auch der Grad und die Richtung der Nullabweichung angezeigt und eine manuelle Korrektur vorgenommen werden. Vorzugsweise ist das System jedoch derart ausgelegt, daß das Prüfverfahren in vorbestimmten Zeitabständen automatische durchgeführt wird.

Dieses Verfahren zum Überwachen der Nullpunkteinstellung kann auch zur Überwachung und eventuellen Korrektur der Kalibrierung benutzt werden, wobei die Kraftmeßvorrichtung in bekannter Weise mit unterschiedlichen Gewichten beladen wird und die gemessenen Ergebnisse mit einer gespeicherten Kalibrierungskennlinie verglichen werden.

**Patentansprüche**

1. Einrichtung zum kontinuierlichen, gravimetrischen Dosieren und pneumatischen Fördern von schüttfähigem Gut, das mit einer Fördereinrichtung über eine Meßstrecke geführt wird, wobei die Fördereinrichtung als druckdicht in einem Gehäuse (2) angeordneter, mit Fördertaschen versehener Rotor (1) mit im wesentlichen vertikaler Achse ausgebildet ist und das Gehäuse (2) eine Schüttgutaufgabestation (68) und eine Entleerungsstation (23) mit Anschlüssen an Leitungen (34) eines pneumatischen Fördersystems besitzt und mit einer Kraftmeßeinrichtung (18) verbunden ist, über die die auf den Rotor (1) durch das geförderte Gut ausgeübte Momentanlast festgestellt wird, aus der durch Multiplizieren mit der Winkelgeschwindigkeit des Rotors (1) die pro Zeiteinheit geförderte Masse an Gut abgeleitet wird, wobei an der Aufgabestation (68, 24) und der Entleerungsstation (23) flexible Zuführglieder (24, 27, 35) zwischen dem Gehäuse (2) und einer Aufgabevorrichtung (19) bzw. den Anschlüssen an das pneumatische Fördersystem derart angeordnet sind, daß alle flexiblen Zuführglieder (24, 27, 35) auf einer im wesentlichen horizontalen Achse (A-A) liegen, die gleichzeitig die Schwenkachse des Gehäuses (2) ist, dadurch gekennzeichnet, daß das Gehäuse (2) möglichst reibungsfrei schwenkbar um die horizontale Achse (A-A) an einem Gerüst oder dergleichen (50) gelagert ist, wobei die Lagerung mittels Wälzlagern (36), Schneide-/Pfannenlagern (40) und/oder Kreuzfedergelenken (38) erfolgt und zumindest eines der Lagerabstützteile (44, 46) für die Lagerung des Gehäuses (2) am Gerüst (50) bezüglich des Gehäuses (2) bzw. des Gerüsts (50) für eine Justierung verstellbar ist, daß als flexible Zuführglieder Balg-, Wulst und/oder Membrankompensatoren (70, 72, 76, 84, 110) verwendet werden und daß eine Vorrichtung zur Korrektur einer Schwerpunktverlagerung vorgesehen ist.

2. Einrichtung nach Anspruch 1, dadurch gekennzeichnet, daß während des Betriebs die Drehrichtung des Rotors (1) ohne Unterbrechung des Schüttgutstroms umgekehrt und dasjenige Lastmoment gemessen wird, das durch die Förderung von den Fördertaschen zugeführtem Gut zwischen Aufgabestation (68, 24) und Entleerungsstation (23) in umgekehrter Drehrichtung verursacht wird, und daß dieses Lastmoment als Korrekturwert beim gravimetrischen Dosieren verwendet wird.

3. Einrichtung nach Anspruch 1 oder 2, dadurch gekennzeichnet, daß die im wesentlichen horizontale Achse (A-A) in Abstand zur im wesentlichen senkrechten Achse verläuft und die Kraftmeßvorrichtung (18) bezüglich der im wesentlichen senkrechte Achse der im wesentlichen horizontalen Achse gegenüberliegend an dem Gehäuse (2) angebracht ist.

4. Einrichtung nach einem der Ansprüche 1 bis 3, dadurch gekennzeichnet, daß die Verstellung des oder der Lagerabstützteil(e) (44, 46) mittels Justageschrauben (64, 66) erfolgt, die beidseitig in Anlage miteinander gegenüberliegenden Seiten des oder der Lagerabstützteil(e) (44, 46) angeordnet sind.

5. Einrichtung nach Anspruch 1, dadurch gekennzeichnet, daß im Inneren der Kompensatoren ein Schutzrohr (74) vorgesehen ist.

6. Einrichtung nach Anspruch 5, dadurch gekennzeichnet, daß Blasvorrichtungen (78, 80) zum Ausblasen der Innenräume der Balgkompensatoren (76) vorgesehen sind.

7. Einrichtung nach Anspruch 5 oder 6, dadurch gekennzeichnet, daß der Membrankompensator aus einem zylinderförmigen Oberteil (86), einem dazu erweiterten Unterteil (90) und einer die beiden Teile (86, 90) im wesentlichen horizontal verbindenden Membran (88) besteht.

8. Einrichtung nach einem der Ansprüche 5 bis 7, dadurch gekennzeichnet, daß der Balgkompensator (110) aus einem zylinderförmigen Oberteil (112) besteht, über dessen Außenmantel sich ein Balg (114) erstreckt, dessen Stirnkanten am Außenmantel befestigt sind, und daß ein erweitertes, vorzugsweise zylinderförmiges Unterteil (116) vorgesehen ist, das im wesentlichen die Hälfte des Balges (114) einschließt und dessen obere Stirnkante mit der Mitte des Balges (114) umfangsmäßig verbunden ist.

9. Einrichtung nach einem der Ansprüche 5 bis 8, dadurch gekennzeichnet, daß der Aufgabenbehälter (19) mit dem der Aufgabestation zugeordneten flexiblen Zuführglied (24) über eine vorzugsweise als Fallrohr (120) ausgebildete Aufgabekammer verbunden ist, und daß die Aufgabekammer (120) Düsen (122) über ihre Außenfläche verteilt besitzt, die an eine Druckluftquelle anschließbar sind.

10. Einrichtung nach einem der Ansprüche 5 bis 9, dadurch gekennzeichnet, daß zwischen dem der Aufgabestation zugeordneten flexiblen Zuführglied (24) und dem Rotor (1) am Gehäuse (2) ein Aufgabeglied (68) angebracht ist, über dessen Innenmantel Vorrichtungen (124, 126) zum Einleiten von Druckluft verteilt angeordnet sind.

11. Einrichtung nach Anspruch 10, dadurch gekennzeichnet, daß die Vorrichtungen zum Einleiten von Druckluft aus einem luftdurchlässigen Sintermantel (126) bestehen.

12. Einrichtung nach einem der vorhergehenden Ansprüche, dadurch gekennzeichnet, daß im Bereich der Aufgabestation (68, 24) ein Temperatursensor (150) angeordnet ist, der mit der Auswertevorrichtung zur Temperaturkompensation verbunden ist.

13. Einrichtung nach einem der vorhergehenden Ansprüche, dadurch gekennzeichnet, daß in der Kraftmeßeinrichtung (18) eine Pendelmasse (136) angelenkt ist, deren Schwerpunkt sich in gleicher Weise verlagert wie der Schwerpunkt der Einrichtung und die auf die Kraftmeßeinrichtung

einwirkt.

14. Einrichtung nach einem der vorhergehenden Ansprüche, dadurch gekennzeichnet, daß an der Einrichtung, insbesondere dem Gehäuse (2) ein Schrägstellungsmesser angebracht ist, der bei Schrägstellungsabweichung des Gehäuses (2) ein Abweichungssignal abgibt, das in den Auswertevorrichtungen zur Kompensation des Schrägstellungseinflusses auf die Meßwerte verwendet wird.

15. Einrichtung nach einem der vorhergehenden Ansprüche, dadurch gekennzeichnet, daß der von der Kraftmeßeinrichtung (18) jeweils festgestellte Meßwert solange verzögert wird, bis die jeweilige Meßposition am sich drehenden Rotor kurz vor der Entleerungsöffnung (160) angelangt ist, und dann erst der Regelvorrichtung zugeführt wird.

16. Einrichtung nach einem der vorhergehenden Ansprüche, dadurch gekennzeichnet, daß der Rotor (1) in mehrere konzentrische Ringe von Fördertaschen (13a, 13b) unterteilt ist, wobei die Fördertaschen der jeweiligen Ringe zueinander versetzt sind.

17. Einrichtung nach Anspruch 16, dadurch gekennzeichnet, daß die Abführleitung (25) an der Entleerungsstation (23) den konzentrischen Ringen entsprechend aufgeteilt ist.

18. Einrichtung nach einem der vorhergehenden Ansprüche, dadurch gekennzeichnet, daß die Unwucht des Rotors mechanisch oder elektronisch kompensiert wird.

19. Einrichtung nach Anspruch 18, dadurch gekennzeichnet, daß zur elektronischen Kompensation der Unwucht des Rotors (1) eine Vorrichtung zur Feststellung der jeweiligen Winkelposition des Rotors vorgesehen ist, die mit der während der Rotation des Rotors (1) festgestellten Fördergutmasse in Beziehung gesetzt wird.

**Claims**

1. Device for the continuous gravimetric metering and pneumatic conveying of pourable material conveyed by means of a feeding device over a measuring path the feeding device being formed as a rotor (1) having an essentially vertical axis, being provided with feeding pockets and being arranged in a pressure-tight manner in a housing (2), the housing (2) comprising a pourable material charging station (68) and a discharging station (23) having connections to ducts (34) of a pneumatic feeding system and being connected to a force measuring device (18) by means of which the momentary load is determined exerted onto the rotor (1) by the conveyed material, from which momentary load by multiplying by the angular velocity of the rotor (1) the conveyed mass of material per time unit is derived, flexible supply elements (24, 27, 35) being provided at the charging station (68, 24) and the discharging station (23) between the housing (2) and a supplying device (19) and the connections to the pneumatic feeding system, respectively, such that all flexible supply members (24, 27, 35) are located on an essentially horizontal axis (A-A) simultaneously being the pivoting axis of the housing (2) characterized in that the housing (2) is journaled pivotally about the horizontal axis (A-A) at a frame or the like (50) as friction-free as possible, the journaling being accomplished by means of roll bearings (36), knife/pan bearings (40) and/or crossed springs bearings (38), and at least one of the bearing supporting elements (44, 46) for supporting of the housing (2) on the frame (50) being adjustable in respect of the housing (2) or the frame (50), respectively, that as flexible supply members bellow, bulge and/or diaphragm compensators (70, 72, 76, 84, 110) are used and that there is provided a means for correcting a displacement of the center of gravity.

2. Device of claim 1, characterized that during operation the direction of rotation of the rotor (1) is reversed without interruption of the pourable material stream and that load moment is measured caused by conveying of material supplied to the feeding pockets between the charging station (68, 24) and the discharging station (23) in reversed direction of rotation, and that this load moment is used as a correction value for the gravimetric metering.

3. Device of claim 1 or 2, characterized in that the essentially horizontal axis (A-A) extends spacedly from the essentially vertical axis and that the force measuring device (18) is fixed to the housing (2), in respect of the essentially vertical axis, oppositely to the essentially horizontal axis.

4. Device of any of the claims 1 to 3, characterized in that the adjustement of the bearing support element(s) (44, 46) is accomplished by adjusting screws (64, 66) arranged on both sides contiguous with opposite ends of the bearing support element(s) (44, 46).

5. Device of claim 1, characterized in that in the interior of the compensators a protection tube (74) is provided.

6. Device of claim 5, characterized in that blowing means (78, 80) are provided for blowing out the interior spaces of the bellow compensators (76).

7. Device of claim 5 or 6, characterized in that the diaphragm compensators comprises a cylindrical upper portion (68), a lower portion (90) expanded thereto and a diaphragm (88) connecting the two parts (86, 90) essentially horizontally.

8. Device of any of the claims 5 to 7, characterized in that the bellow compensator (110) comprises a cylindrical upper portion (112) a bellow (114) extending around the outer wall thereof, the end edges of the bellow being connected to the outer wall, and that there is provided an expanded preferably cylindrical lower portion (116) housing at least half of the bellow (114) and being connected with its upper end edge thereof with the center of the bellow (114) in a peripheral manner.

9. Device of any of the claims 5 to 8, characterized in that the supply container (19) is connected to the flexible supply member (24) associated to the charging station through a charging chamber preferably formed as a guide tube (120) and that the charging chamber (120) is provided with nozzles (122) distributed over the outer surface thereof and connectable to a pressurized air source.

10. Device of any of the claims 5 to 9, characterized in that between the flexible supply element (24) associated to the charging station and the rotor (1) a charging element (68) is connected to the housing (2), provided distributed over the inner peripheral surface thereof with means (124, 126) for entering pressurized air.

11. Device of claim 10, characterized in that the means for entering pressurized air consist of an air permeable sintered wall (126).

12. Device of any of the preceding claims, characterized in that in the region of the charging station (68, 24) a temperature sensor (150) is provided connected to the evaluation means for temperature compensation.

13. Device according to any of the preceding claims, characterized in that in the force measuring device (18) a pendulum mass (136) is hinged the centre of gravity of which is displaced in the same manner as the center of gravity of the device, and which acts onto the force measuring device.

14. Device of any of the preceding claims, characterized in that at the device, in particular at the housing (2) an inclination meter is provided issuing a deviation signal upon an inclination deviation of the housing (2) which signal is used for compensating the inclination influence onto the measuring values in the evaluation means.

15. Device of any of the preceding claims, characterized in that the measuring value currently determined by the force measuring device (18) is delayed until the respective measuring position at the rotating rotor arrives shortly before the discharging opening (160) and that only then it is supplied to the control means.

16. Device of any of the preceding claims, characterized in that the rotor (1) is subdivided in a plurality of concentrical rings of feeding pockets (13a, 13b) the feeding pockets of the individual rings being set-off to each other.

17. Device of claims 16, characterized in that the discharging duct (25) is divided at the discharging station (23) in accordance with the concentrical rings.

18. Device of any of the preceding claims, characterized in that the unbalance of the rotor is compensated mechanically or electronically.

19. Device of claim 18, characterized in that for an electronic compensation of the unbalance of the rotor (1) a means is provided for determining the momentary angular position of the rotor which position is set into relation to the conveyed material mass determined during the rotation of the rotor (1).

**Revendications**

1. Dispositif pour le dosage gravimétrique continu et pour le transport pneumatique de marchandises en vrac qui sont entraînées par un transporteur sur une section mesurée, dans lequel le transporteur est configuré comme un rotor (1) étanche, disposé dans un carter (2) et doté de poches de transport, avec un axe essentiellement vertical, et le carter (2) possède un poste d'alimentation de marchandises en vrac (68) et un poste de vidage (23) avec des connexions à des canalisations (34) d'un système de transport pneumatique, et est relié à un dispositif dynamométrique (18), via lequel est déterminée la charge instantanée exercée sur le rotor par les marchandises transportées, à partir de laquelle, par multiplication par la vitesse angulaire du rotor (1), on détermine la masse de marchandises transportées par unité de temps, dans lequel des éléments de guidage flexibles (24, 27, 35) sont disposés au poste d'alimentation (68, 24) et au poste de vidage (23), entre le carter (2) et un dispositif d'alimentation (19), ou les connexions au système de transport pneumatique sont réalisées de façon telle que tous les éléments de guidage flexibles (24, 27, 35) se trouvent sur un axe (A-A) essentiellement horizontal, qui est en même temps l'axe de pivotement du carter (2), caractérisé en ce que le carter (2) est à pivotement pratiquement sans frottement autour de l'axe horizontal (A-A), sur un châssis ou analogue (50), dans lequel le montage à pivotement se fait par des paliers à roulements (36), à couteaux/coussinets (40) et/ou un joint universel élastique (38), et au moins un des éléments d'appui (44, 46) pour le logement du carter (2) est mobile sur le châssis (50) par rapport au carter (2) ou au châssis (50) aux fins d'ajustement, que des compensateurs à soufflet, à bourrelets et/ou à membrane (70, 72, 76, 84, 110) sont utilisés comme éléments de guidage flexibles, et qu'un dispositif est prévu pour la correction du déplacement du centre de gravité.

2. Dispositif selon la revendication 1, caractérisé en ce que, en fonctionnement, le sens de rotation du rotor (1) est inversé sans interruption du flux de marchandises en vrac, et on mesure le moment de charge provoqué, lors du pivotement en sens inverse, par le transport des marchandises amenées dans les poches de transport, entre le poste d'alimentation (68, 24) et le poste de vidage (23) et ce moment de charge est utilisé comme valeur de correction pour le dosage gravimétrique.

3. Dispositif selon la revendication 1 ou 2, caractérisé en ce que l'axe essentiellement horizontal (A-A) passe à distance de l'axe essentiellement vertical, et que le dispositif dynamométrique (18) est disposé par rapport à l'axe essentiellement vertical sur le carter (2), face à l'axe essentiellement horizontal.

4. Dispositif selon une des revendications 1 à 3, caractérisé en ce que le réglage des éléments d'appui (44, 46) s'opère au moyen de vis de réglage (64, 66), disposées de part et d'autre des faces des éléments d'appui (44, 46) opposées l'une à l'autre.

5. Dispositif selon la revendication 1, caractérisé en ce qu'un tube de protection (74) est prévu à l'intérieur des compensateurs.

6. Dispositif selon la revendication 5, caractérisé en ce que des dispositifs à soufflets (78, 80) sont prévus pour le vidage des parties internes des compensateurs à soufflet (76).

7. Dispositif selon une des revendications 5 ou 6, caractérisé en ce que le compensateur à membrane consiste en une partie supérieure cylindrique (86), une partie inférieure (90) élargie, et une membrane (88) essentiellement horizontale reliant ces deux parties (86, 90).

8. Dispositif selon une des revendications 5 à 7, caractérisé en ce que le compensateur à soufflet (110) consiste en une partie supérieure cylindrique (112) au-dessus de l'enveloppe extérieure de laquelle s'étend un soufflet (114) dont les bords sont fixés à l'enveloppe extérieure, et en ce qu'on prévoit une partie inférieure (116) élargie, de préférence cylindrique, qui inclut essentiellement la moitié du soufflet (134) et dont le bord supérieur est relié périphériquement au centre du soufflet (114).

9. Dispositif selon une des revendications 5 à 8, caractérisé en ce que le réservoir d'alimentation (19) est relié à l'élément de conduite flexible (24) associé au poste d'alimentation via une chambre d'alimentation réalisée de préférence en forme de tuyau de chute (120), et en ce que la chambre d'alimentation (120) possède des buses (122) réparties sur sa surface extérieure, qui peuvent être reliées à une source d'air comprimé.

10. Dispositif selon une des revendications 5 à 9, caractérisé en ce que, entre l'élément de conduite flexible (24) associé au poste d'alimentation, et le rotor (1), un élément d'alimentation (68) est monté sur le carter (2), et des dispositifs (124, 126) pour l'introduction d'air comprimé sont répartis sur son enveloppe interne.

11. Dispositif selon la revendication 10, caractérisé en ce que les dispositifs pour l'introduction d'air comprimé consistent en une enveloppe frittée (126) perméable à l'air.

12. Dispositif selon une des revendications qui précèdent, caractérisé en ce qu'un capteur de température (150) est disposé à proximité du poste d'alimentation (68, 24), capteur qui est relié au dispositif d'évaluation pour la compensation de température.

13. Dispositif selon une des revendications qui précèdent, caractérisé en ce que, dans le dispositif dynamométrique (18), une masse pendulaire (136) est articulée dont le centre de gravité s'abaisse de la même façon que le centre de gravité du dispositif, et qui agit sur le dispositif dynamométrique.

14. Dispositif selon une des revendications qui précèdent, caractérisé en ce qu'un dispositif de mesure d'inclinaison est disposé sur le dispositif, en particulier le carter (2), lequel dispositif de mesure, en cas d'écart d'inclinaison du carter (2), émet un signal d'écart qui est utilisé dans les dispositifs d'évaluation pour la compensation de l'influence de l'inclinaison sur les valeurs de mesure.

15. Dispositif selon une des revendications qui précèdent, caractérisé en ce que la valeur de mesure, déterminée à chaque fois par le dispositif dynamométrique (18) est temporisée jusqu'à ce que la position de mesure correspondante sur le rotor en rotation soit arrivée peu avant l'ouverture de vidage (160), pour être seulement transmise ensuite au dispositif de régulation.

16. Dispositif selon une des revendications qui précèdent, caractérisé en ce que le rotor (1) est subdivisé en plusieurs cercles de poches de transport (13a, 13b) concentriques, les poches de transport des divers cercles étant décalées l'une par rapport à l'autre.

17. Dispositif selon une des revendications qui précèdent, caractérisé en ce que la conduite d'évacuation (25) est divisée selon les cercles concentriques, au poste de vidage (23).

18. Dispositif selon une des revendications qui précèdent, caractérisé en ce que le balourd du rotor est compensé mécaniquement ou électroniquement.

19. Dispositif selon la revendication 18, caractérisé en ce que, pour la compensation électronique du balourd du rotor (1), il est prévu un dispositif de détermination de la position angulaire du rotor, qui est mis en relation avec la masse de produits transportés, déterminée pendant la rotation du rotor (1).

Fig. 1

Fig. 2

EP 0 198 956 B1

Fig. 3

Fig. 5

2

Fig. 4

66  46  50

36

64  44  2

Fig. 5a

38

Fig. 5b

40

Fig. 5c

EP 0 198 956 B1

Fig. 6a
Fig. 6b
Fig. 6c
Fig. 6d
Fig. 6e

5

Fig.7

Fig. 8

6

Fig. 9

Fig. 10